# EUROPEAN PATENT APPLICATION

(11) **EP 4 645 529 A1**
(43) Date of publication of application: **05.11.2025**
(21) Application number: 23911487.9
(22) Date of filing: 27.11.2023
(51) Int. Cl.: H01M 10/6556, H01M 10/613, H01M 10/6568

(54) **BATTERY COOLING DEVICE**

(30) Priority: 27.12.2022 JP 2022210728
(71) Applicant: AISIN CORPORATION, Kariya-shi, Aichi 448-8650 (JP)
(72) Inventor: UCHIDA, Masayuki, Kariya-shi, Aichi 448-8650 (JP); ISHIYAMA, Hiroshi, Kariya-shi, Aichi 448-8650 (JP); SASAKI, Daisuke, Kariya-shi, Aichi 448-8650 (JP); UEDA, Yuta, Kariya-shi, Aichi 448-8650 (JP)
(74) Representative: TBK
(86) International application number: PCT/JP2023/042353
(87) International publication number: WO 2024/142706

(57) **Abstract**

A battery cooling device includes: a battery case with an accommodation portion accommodating a battery module; an inlet port that is provided at a central portion in a first direction in the battery case and on one end side in a second direction and into which cooling liquid supplied from a pump is introduced; discharge ports discharging, on an upper side of each of a plurality of the cells, the cooling liquid introduced into the inlet port; and a communication path causing the inlet port to communicate with the discharge ports. The communication path includes a branching flow path including first and second branching flow paths. The first branching flow path communicates with the inlet port and branches to one end side of the first direction. The second branching flow path communicates with the inlet port and branches to another end side of the first direction.

## Description

### Technical Field

The present invention relates to a battery cooling device that cools a battery.

### Background Art

A battery is configured to include a plurality of battery modules each formed by arrangement of a plurality of cells. Such a battery generates heat by outputting electric power or being charged. Using the battery in such a heat generation state causes performance of the battery to deteriorate. There is a possibility that a thermal runaway occurs in the battery when a temperature of the battery exceeds a predetermined temperature. For this reason, techniques for cooling the battery have been studied (e.g., Patent Literature 1).

Patent Literature 1 describes a secondary battery cooling mechanism that can individually cool a plurality of secondary batteries. The secondary batteries to be cooled by the secondary battery cooling mechanism each include a safety valve on an upper surface of a casing of each of the secondary batteries. The safety valve opens when a temperature reaches a predetermined temperature. An ejection nozzle is arranged in such a way as to be able to eject cooling water while facing the safety valve When a temperature inside the casing reaches the predetermined temperature, the safety valve operates to allow the cooling water to flow into inside of the secondary battery and cool the inside of the secondary battery.

### Citation List

### Patent Literature

Patent Literature 1: JP2018-133134A

### Summary of Invention

### Technical Problem

In the secondary battery cooling structure described in Patent Literature 1, a plurality of the ejection nozzles (nozzles) are provided in such a way as to branch from one pipe. For this reason, a supplied quantity of the cooling water on a downstream side becomes smaller than that on an upstream side, and a pressure of the cooling water on a downstream also becomes lower than that on an upstream side. Accordingly, there is a possibility that a supplied quantity of the cooling water becomes smaller on a more downstream side and thus cooling becomes uneven between an upstream side and a downstream side, and that the battery modules constituting the battery cannot be cooled uniformly.

In view of the above, a need exists for a battery cooling device that can uniformly cool a battery module.

### Solution to Problem

A feature configuration of a battery cooling device according to the present invention lies in that the battery cooling device cools a battery including a battery module in which a plurality of cells are arranged along a first direction, and includes: a battery case including an accommodation portion that accommodates the battery module; an inlet port that is provided at a central portion in the first direction in the battery case and on one end side in a second direction perpendicular to the first direction, and into which cooling liquid supplied from a pump is introduced; discharge ports discharging, on an upper side of each of a plurality of the cells, the cooling liquid introduced into the inlet port; and a communication path causing the inlet port and the discharge ports to communicate with each other, the communication path includes a branching flow path including a first branching flow path and a second branching flow path, the first branching flow path communicates with the inlet port and branches to one end side of the first direction, and the second branching flow path communicates with the inlet port and branches to another end side of the first direction.

With such a feature configuration, the cooling liquid introduced into the inlet port is branched by the branching flow path and flowed, thereby enabling reduction of a variation in length (flow path length) of the communication path causing the inlet port to communicate with the discharge ports provided on an upper side of each of a plurality of the cells. Accordingly, a variation in quantity of the cooling liquid discharged toward each of a plurality of the cells can be reduced, and thus, the battery module can be cooled uniformly.

### Brief Description of Drawings

FIG. 1 is a diagram illustrating a configuration of a battery cooling device according to a first embodiment.
FIG. 2 is a diagram illustrating a communication path and discharge ports in the first embodiment.
FIG. 3 is a diagram illustrating a communication path and discharge ports in a second embodiment.
FIG. 4 is a diagram illustrating a communication path and discharge ports in a third embodiment.
FIG. 5 is a diagram illustrating a flow rate control mechanism.

### Description of Embodiments

### [First Embodiment]

A battery cooling device according to the present invention is configured to cool a battery (also referred to as "battery pack") including a battery module constituted of a plurality of cells. The cell is the smallest unit constituting the battery. One battery module is constituted by a plurality of the cells connected in series to each other. Further, in this embodiment, a plurality of the battery modules are connected in series to each other, and configurations each including the battery modules connected in series to each other are connected in parallel to each other to configure one battery. The battery cooling device cools each of the battery modules to cool the battery. The following describes the battery cooling device 1 according to this embodiment.

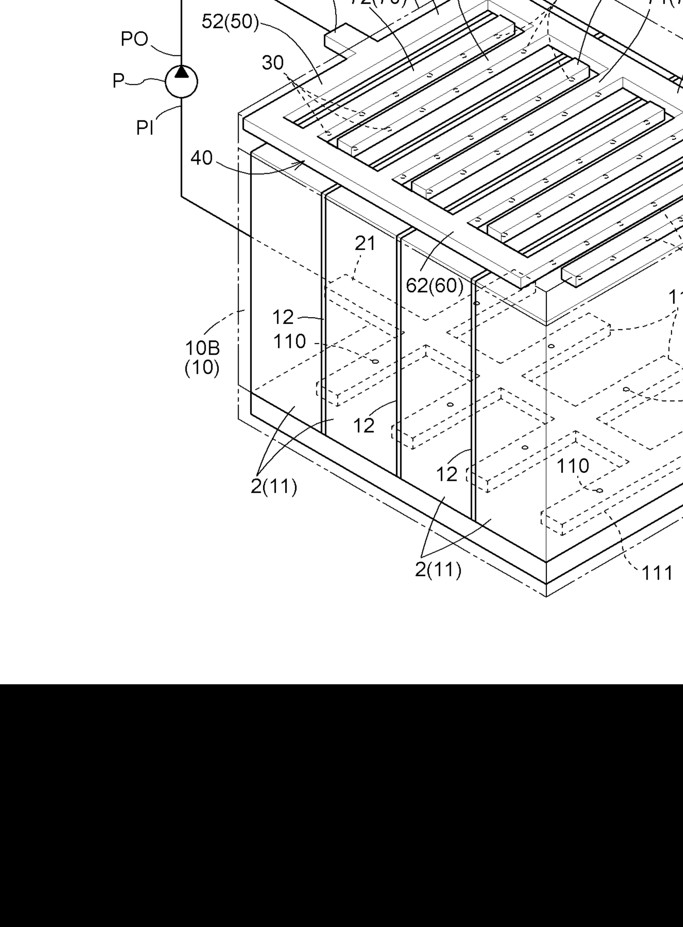

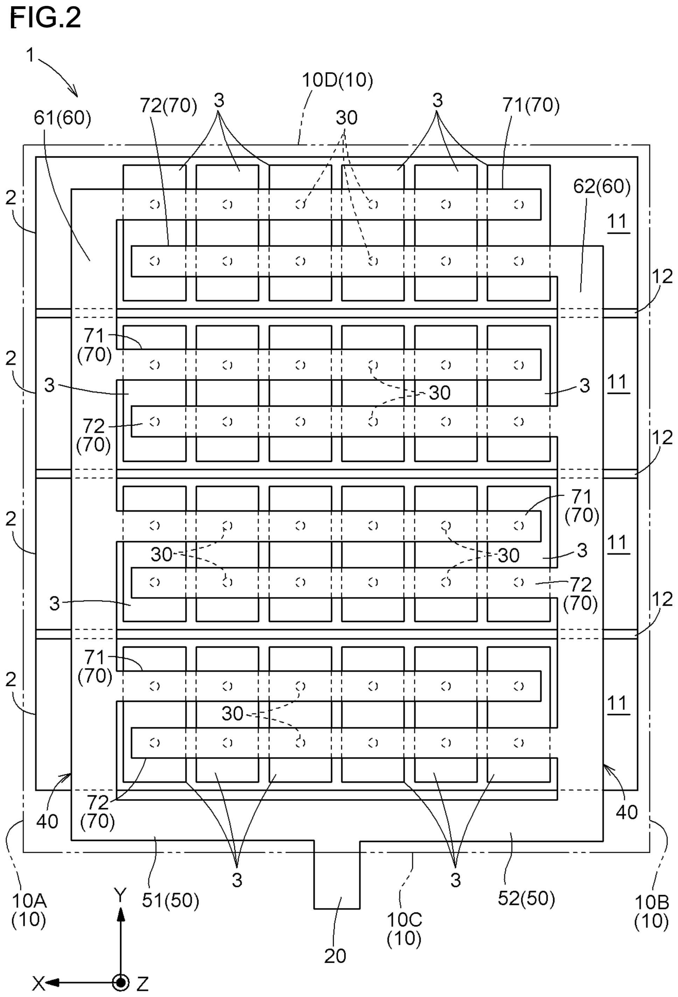

FIG. 1 schematically illustrates a configuration of the battery cooling device 1. FIG. 2 is a plan view of the battery cooling device 1. As illustrated in FIG. 1, the battery cooling device 1 includes a battery case 10, an inlet port 20, discharge ports 30, and a communication path 40.

The battery case 10 includes a plurality of accommodation portions 11 separated from each other by plate-shaped inter-module plates 12. In the battery case 10 in FIG. 1, four accommodation portions 11 are formed by being separated by the three inter-module plates 12. For each of a plurality of the battery modules 2, the battery module 2 is accommodated in the accommodation portion 11. Accordingly, one accommodation portion 11 accommodates one battery module 2.

Herein, in the plan view of the battery cooling device 1, a direction in which the inter-module plates 12 extend is defined as a first direction X, and a direction that is perpendicular to the first direction X and in which the three inter-module plates 12 are lined is defined as a second direction Y. A direction perpendicular to both the first direction X and the second direction Y is defined as a third direction Z.

As illustrated in FIG. 2, a plurality of the cells 3 are arranged along the first direction X. The battery modules 2 are arranged along the second direction Y. Accordingly, the battery case 10 includes a plurality of the battery modules 2 each including a plurality of the cells 3 arranged along the first direction X, while a plurality of the battery modules 2 are arranged along the second direction Y in the battery case 10. In this embodiment, the six cells 3 are arranged along the first direction X in the one battery module 2, and the four battery modules 2 are arranged along the second direction Y.

The inlet port 20 is provided to be at a central portion in the first direction X in the battery case 10 and be on one end side in the second direction Y. The central portion in the first direction X in the battery case 10 is a central portion between one end side and the other end side in the first direction X in the battery case 10. Herein, when a surface on one end side in the first direction X in the battery case 10 is defined as a first side surface 10A, and a surface on the other end side in the first direction X in the battery case 10 is defined as a second side surface 10B, the central portion between the one end side and the other end side in the first direction X in the battery case 10 is a central portion between the first side surface 10A and the second side surface 10B.

The one end side in the second direction Y is an end portion on one side in the second direction Y in the battery case 10. Herein, when a surface on one end side in the second direction Y in the battery case 10 is defined as a third side surface 10C, and a surface on the other end in the second direction Y in the battery case 10 is defined as a fourth side surface 10D, the end portion on one side in the second direction Y in the battery case 10 is the third side surface 10C.

Accordingly, as illustrated in FIG. 2, the inlet port 20 is provided to be at the central portion between the first side surface 10A and the second side surface 10B in the battery case 10 and be on a side of the third side surface 10C in the battery case 10.

Cooling liquid supplied from a pump P is introduced into the inlet port 20. As illustrated in FIG. 1, the pump P is provided as a body separated from the battery case 10, and the pump P includes an outlet port PO communicating with the inlet port 20. The pump P includes an intake port PI communicating with an exit port 21 of the battery case 10. The pump P is driven by an unillustrated motor. Thereby, the cooling liquid circulates between the pump P and the battery case 10. Certainly, a configuration can be made in such a way that a cooling device for cooling the cooling liquid for example is provided between the exit port 21 and the intake port PI of the pump P, and the cooling liquid from the exit port 21 is sucked by the pump P via the cooling device. Herein, the cooling liquid is cooling water such as a long life coolant (LLC), an insulating oil such as paraffin-based oil, or the like.

The discharge ports 30 discharge, on an upper side of a plurality of the respective cells 3, the cooling liquid that has been introduced into the inlet port 20. The cooling liquid that has been introduced into the inlet port 20 is the cooling liquid from the pump P, as described above. The upper side of each of a plurality of the cells 3 refers to an upper side of each of the cells 3 along the third direction Z while the cells 3 are arranged in a matrix inside the battery case 10. Accordingly, the discharge port 30 discharges, from an upper side of each of a plurality of the cells 3 along the third direction Z, the cooling liquid that has been sent from the pump P and introduced into the inlet port 20, while the cells are arranged in a matrix inside the battery case 10.

Herein, a nozzle can be used as the discharge port 30. The nozzles eject, toward a plurality of the respective cells 3, the cooling liquid that has circulated to the nozzles. Thereby, the cooling liquid can be sprayed directly to a plurality of the respective cells 3. Thus, the cooling liquid sprayed to a plurality of the respective cells 3 can easily remove heat from the cells 3 so that the cooling effect can be enhanced. The discharge port 30 can be configured in such a way as to cause the cooling liquid to include bubbles, for example, or can be configured in such a way as to discharge the cooling liquid in a dispersed manner as in a shower head, for example.

The inlet port 20 communicates with the discharge ports 30 via the communication path 40. In this embodiment, all the paths causing the inlet port 20 to communicate with the discharge ports 30 are referred to as the communication path 40. Thus, the cooling liquid that has been introduced into the inlet port 20 flows through the communication path 40, reaches the discharge ports 30, and is discharged from the discharge ports 30.

In this embodiment, the communication path 40 has a branching flow path 50, a connection flow path 60, and a return flow path 70. In this embodiment, the branching flow path 50 includes a first branching flow path 51 and a second branching flow path 52. The first branching flow path 51 corresponds to a flow path communicating with the inlet port 20 and branching to one end side in the first direction X. As illustrated in FIG. 2, in this embodiment, the inlet port 20 is provided to extend in the second direction Y inside the battery case 10. The first branching flow path 51 is provided to branch, from a distal end portion of the inlet port 20 in the second direction Y, toward the first side surface 10A of the battery case 10. The second branching flow path 52 corresponds to a flow path communicating with the inlet port 20 and branching to the other end side in the first direction X. Thus, the second branching flow path 52 is provided to branch, from the distal end portion of the inlet port 20 in the second direction Y, toward the second side surface 10B of the battery case 10.

The connection flow path 60 includes a first connection flow path 61 and a second connection flow path 62. The first connection flow path 61 corresponds to a flow path communicating with the first branching flow path 51 and extending to the other end side of the second direction Y. In other words, the first connection flow path 61 extends along the second direction Y on one end side of the first direction X. In this embodiment, the first connection flow path 61 is provided to extend from one end side of the first direction X in the first branching flow path 51 to the other end side of the second direction Y. Accordingly, the first connection flow path 61 extends, from a side of the first side surface 10A in the first branching flow path 51, along the first side surface 10A of the battery case 10. The second connection flow path 62 corresponds to a flow path communicating with the second branching flow path 52 and extending to the other end side of the second direction Y. In other words, the second connection flow path 62 extends along the second direction Y on the other end side of the first direction X. In this embodiment, the second connection flow path 62 is provided to extend from the other end side of the first direction X in the second branching flow path 52 to the other end side of the second direction Y. Accordingly, the second connection flow path 62 extends, from a side of the second side surface 10B in the second branching flow path 52, along the second side surface 10B of the battery case 10.

The return flow path 70 includes a first return flow path 71 and a second return flow path 72. The first return flow path 71 extends from the first connection flow path 61 to a side of the second connection flow path 62. In other words, the first return flow path 71 corresponds to a flow path communicating with the first branching flow path 51 and returning from one end side to the other end side of the first direction X. In this embodiment, the first return flow path 71 communicates with the first branching flow path 51 via the first connection flow path 61. Accordingly, the first return flow path 71 is provided to communicate with the first branching flow path 51 via the first connection flow path 61 and extend from the first connection flow path 61 toward the second side surface 10B. The second return flow path 72 extends from the second connection flow path 62 to a side of the first connection flow path 61. In other words, the second return flow path 72 corresponds to a flow path communicating with the second branching flow path 52 and returning from the other end side to one end side of the first direction X. In this embodiment, the second return flow path 72 communicates with the second branching flow path 52 via the second connection flow path 62. Accordingly, the second return flow path 72 is provided to communicate with the second branching flow path 52 via the second connection flow path 62 and extend from the second connection flow path 62 toward the first side surface 10A.

As illustrated in FIG. 2, the first return flow path 71 and the second return flow path 72 at least partially overlap with each other in the second direction Y (i.e., when viewed along the second direction). Thereby, the second return flow path 72 can be provided between two first return flow paths 71 adjacent to each other, and the first return flow path 71 can be provided between two second return flow paths 72 adjacent to each other. Accordingly, a space between two first return flow paths 71 and a space between two second return flow paths 72 can be effectively used to form the flow paths.

As illustrated in FIG. 2, the first return flow path 71 extends along the first direction X as far as a position in front of the second connection flow path 62, and the second return flow path 72 extends along the first direction X as far as a position in front of the first connection flow path 61. Thereby, for example, on a side close to the first branching flow path 51 in the first return flow path 71, the cooling liquid can be discharged from the discharge port 30 on a side close to the first branching flow path 51 in the first return flow path 71 and from the discharge port 30 on a side farther from the second branching flow path 52 in the second return flow path 72. On a side farther from the first branching flow path 51 in the first return flow path 71, the cooling liquid can be discharged from the discharge port 30 on a side farther from the first branching flow path 51 in the first return flow path 71 and from the discharge port 30 on a side close to the second branching flow path 52 in the second return flow path 72. At an intermediate position in the first return flow path 71, the cooling liquid can be discharged from the discharge port 30 at an intermediate position in the first return flow path 71 and from the discharge port 30 at an intermediate position in the second return flow path 72. Accordingly, an averaged quantity of the cooling liquid can be discharged, and thus, the battery module 2 can be cooled more uniformly.

The return flow path 70 is provided in such a way that both the first return flow path 71 and the second return flow path 72 are located over one battery module 2. As described above, the first return flow path 71 is provided to be oriented toward the second side surface 10B along the first direction X with respect to the first branching flow path 51. The second return flow path 72 is provided to be oriented toward the first side surface 10A along the first direction X with respect to the second branching flow path 52. The first return flow path 71 and the second return flow path 72 are provided at mutually different distances along the second direction Y from the branching flow path 50. Accordingly, as illustrated in FIG. 2, the first return path 71 and the second return path 72 are provided in parallel to each other over one battery module 2.

Each of the first return flow path 71 and the second return flow path 72 includes the discharge ports 30 at positions overlapping with the cells 3 when viewed from an upper side, in such a way as to discharge the cooling liquid while facing to a lower side. Herein, a quantity of the cooling liquid flowing in the first return flow path 71 decreases as the cooling liquid approaches the second side surface 10B from the first connection flow path 61. Meanwhile, a quantity of the cooling liquid flowing in the second return flow path 72 decreases as the cooling liquid approaches the first side surface 10A from the second connection flow path 62.

For this reason, a larger quantity of the cooling liquid is discharged from the first return flow path 71 to the cell 3 closer to the first side surface 10A, and a smaller quantity of the cooling liquid is discharged from the second return flow path 72 to the cell 3 closer to the first side surface 10A. Meanwhile, a smaller quantity of the cooling liquid is discharged from the first return flow path 71 to the cell 3 closer to the first side surface 10A, and a larger quantity of the cooling liquid is discharged from the second return flow path 72 to the cell 3 closer to the first side surface 10A. An intermediate quantity of the cooling liquid is discharged from the first return flow path 71 and the second return flow path 72 to the cells 3 in a central area of the first direction X. Thus, a total quantity of the cooling liquid discharged from the first return flow path 71 to the respective cells 3 provided in one battery module 2 can be made approximately the same as a total quantity of the cooling liquid discharged from the second return flow path 72 to the respective cells 3 provided in this battery module 2. Accordingly, a plurality of the cells 3 arranged along the first direction X can be cooled uniformly.

The inlet port 20, the discharge ports 30, and the communication path 40 described above are formed in an upper plate 13 provided on an upper side of the battery case 10. A lower plate 14 is provided on a lower side of the battery case 10, and the cooling liquid that has been introduced into the battery case 10 exits from the exit port 21 via a discharge portion 110 and a discharge communication path 111 formed in the lower plate 14. The discharge communication path 111 may also be configured to include a return flow path similarly to the above-described communication path 40.

### [Second Embodiment]

Next, a second embodiment of the battery cooling device 1 is described. In the above-described first embodiment, the cooling liquid is discharged to one cell 3 from the first return flow path 71 and from the second return flow path 72. However, in the second embodiment, the cooling liquid is discharged to one cell 3 from only one of the first return flow path 71 and the second return flow path 72. In this regard, the second embodiment differs from the above-described first embodiment. The battery case 10, the inlet port 20, the branching flow path 50, and the connection flow path 60 are similar to those in the first embodiment, and thus, the description thereof is omitted, and the following mainly describes the points that are different from those in the first embodiment.

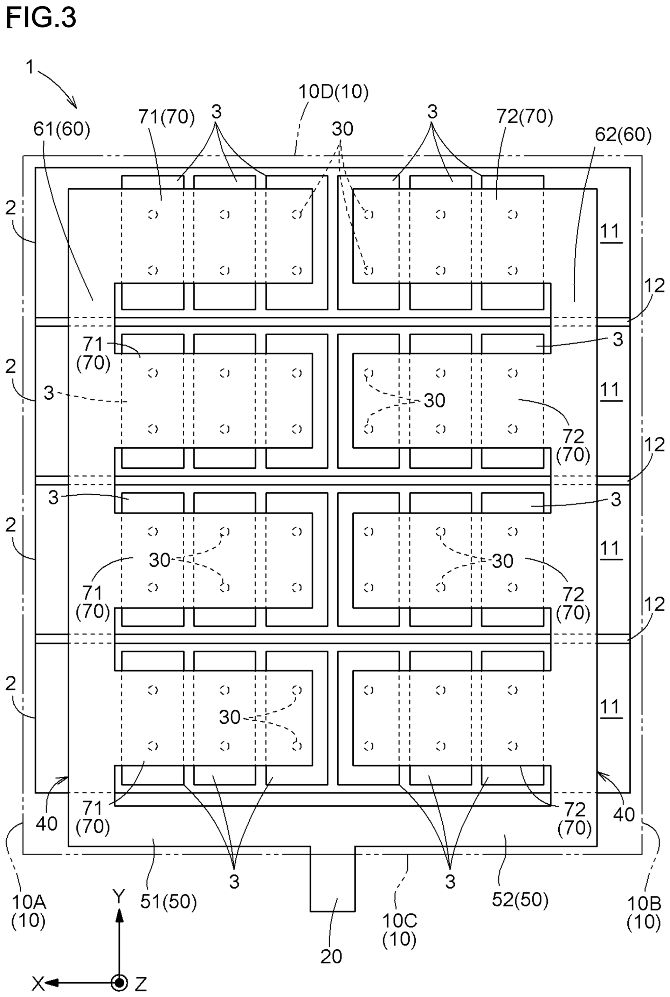

FIG. 3 is a plan view of the battery cooling device 1 according to this embodiment. In this embodiment, similarly to the first embodiment, the return flow path 70 includes the first return flow path 71 and the second return flow path 72. As illustrated in FIG. 3, the first return flow path 71 corresponds to a flow path communicating with the first branching flow path 51 and returning from one end side of the first direction X as far as a central area of the first direction X. In this embodiment, similarly to the first embodiment, the first return flow path 71 communicates with the first branching flow path 51 via the first connection flow path 61. The central area of the first direction X is a central area in the first direction X between the first side surface 10A and the second side surface 10B. Accordingly, the first return flow path 71 is provided to communicate with the first branching flow path 51 via the first connection flow path 61 and extend from the first connection flow path 61 as far as the central area in the first direction X between the first side surface 10A and the second side surface 10B. The second return flow path 72 corresponds to a flow path communicating with the second branching flow path 52 and returning from the other end side of the first direction X as far as the central area of the first direction X. In this embodiment, the second return flow path 72 communicates with the second branching flow path 52 via the second connection flow path 62. Accordingly, the second return flow path 72 is provided to communicate with the second branching flow path 52 via the second connection flow path 62 and extend from the second connection flow path 62 as far as the central area in the first direction X between the first side surface 10A and the second side surface 10B. The first return flow path 71 and the second return flow path 72 are provided over the battery module 2 while being not connected to each other.

The return flow path 70 is provided in such a way that both the first return flow path 71 and the second return flow path 72 are located over one battery module 2. The first return flow path 71 is provided to extend along the first direction X from the first branching flow path 51 as far as the central area in the first direction X between the first side surface 10A and the second side surface 10B. The second return flow path 72 is provided to extend along the first direction X from the second branching flow path 52 as far as the central area in the first direction X between the first side surface 10A and the second side surface 10B. The first return flow path 71 and the second return flow path 72 are provided at the mutually equal distances from the branching flow path 50 along the second direction Y. Accordingly, as illustrated in FIG. 3, the first return flow path 71 and the second return flow path 72 are arranged in such a way as to include distal end portions facing each other, in the central area in the first direction X between the first side surface 10A and the second side surface 10B. Thereby, the return flow path 70 is provided in such a way that only one of the first return flow path 71 and the second return flow path 72 is located over one cell 3.

In this embodiment, each of the first return flow path 71 and the second return flow path 72 includes two discharge ports 30 at positions overlapping with one cell 3 when viewed from an upper side, in such a way as to discharge the cooling liquid while facing to a lower side. A quantity of the cooling liquid flowing in the first return flow path 71 becomes smaller at a position more separated from the first connection flow path 61. A quantity of the cooling liquid flowing in the second return flow path 72 becomes smaller at a position more separated from the second connection flow path 62.

However, in this embodiment, a length of the return flow path 70 that returns from the connection flow path 60 is made shorter than (about half) a length along the first direction X between the first side surface 10A and the second side surface 10B, thereby reducing a difference between a quantity of the cooling liquid in the return flow path 70 discharged to the cell 3 on a side closer to the connection flow path 60 and a quantity of the cooling liquid in the return flow path 70 discharged to the cell 3 on a side closer to the central area. Accordingly, a plurality of the cells 3 arranged along the first direction X can be cooled uniformly.

### [Third embodiment]

Next, a third embodiment of the battery cooling device 1 is described. In the first embodiment and the second embodiment described above, the communication path 40 includes two flow paths along the second direction Y that are the first connection flow path 61 and the second connection flow path 62. However, in the third embodiment, flow paths along the second direction Y are provided in addition to two flow paths that are the first connection flow path 61 and the second connection flow path 62. In this regard, the third embodiment differs from the first embodiment and the second embodiment described above. The battery case 10, the inlet port 20, the branching flow path 50, and the connection flow path 60 are similar to those in the first embodiment, and thus, description thereof is omitted, and the following mainly describes the points that are different from those in the first embodiment.

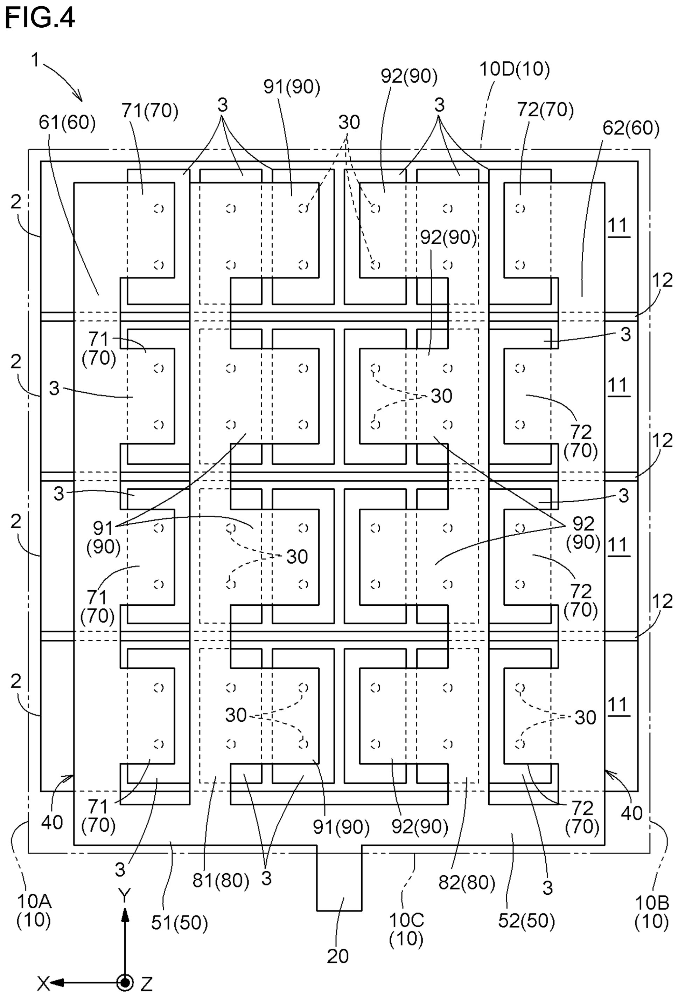

FIG. 4 is a plan view of the battery cooling device 1 according to this embodiment. The communication path 40 in this embodiment includes the branching flow path 50, the connection flow path 60, the return flow path 70, an auxiliary flow path 80, and a branch flow path 90. As described above, the branching flow path 50 and the connection flow path 60 are similar to those in the first embodiment.

The auxiliary flow path 80 branches from an intermediate part of the branching flow path 50. The intermediate part of the branching flow path 50 corresponds to a part between a part included in the branching flow path 50 and communicating with the inlet port 20 and a part included in the branching flow path 50 and communicating with the connection flow path 60. Accordingly, the auxiliary flow path 80 is provided to branch from the part included in the branching flow path 50 and located between the part communicating with the inlet port 20 and the part communicating with the connection flow path 60.

Also in this embodiment, the branching flow path 50 includes the first branching flow path 51 and the second branching flow path 52, and the connection flow path 60 includes the first connection flow path 61 and the second connection flow path 62. In this embodiment, the auxiliary flow path 80 includes a first auxiliary flow path 81 and a second auxiliary flow path 82. The first auxiliary flow path 81 branches from the intermediate part of the first branching flow path 51 to the other end side of the second direction Y. In other words, the first auxiliary flow path 81 is provided to extend toward the fourth side surface 10D from the part between the part included in the first branching flow path 51 and communicating with the inlet port 20 and the part included in the first branching flow path 51 and communicating with the first connection flow path 61. The second auxiliary flow path 82 branches from the intermediate part of the second branching flow path 52 to the other end side of the second direction Y. In other words, the second auxiliary flow path 82 is provided to extend toward the fourth side surface 10D from the part between the part included in the second branching flow path 52 and communicating with the inlet port 20 and the part included in the second branching flow path 52 and communicating with the second connection flow path 62.

The return flow path 70 returns with respect to the branching flow path 50. In this embodiment, similarly to the first embodiment, the return flow path 70 is configured in such a way as to return with respect to the branching flow path 50 via the connection flow path 60. The return flow path 70 includes the first return flow path 71 and the second return flow path 72. The first return flow path 71 corresponds to a flow path communicating with the first branching flow path 51 and returning from one end side of the first direction X to the first auxiliary flow path 81. In the present embodiment, similarly to the first embodiment, the first return flow path 71 communicates with the first branching flow path 51 via the first connection flow path 61. Returning from one end side of the first direction X to the first auxiliary flow path 81 means returning from a side of the first side surface 10A as far as a position in front of the first auxiliary flow path 81. In other words, the first return flow path 71 is provided in a state of being not connected to the first auxiliary flow path 81. Accordingly, the first return flow path 71 is provided to communicate with the first branching flow path 51 via the first connection flow path 61 and extend along the first direction X from the first connection flow path 61 as far as the position in front of the first auxiliary flow path 81.

The second return flow path 72 corresponds to a flow path communicating with the second branching flow path 52 and returning from the other end side of the first direction X to the second auxiliary flow path 82. In this embodiment, similarly to the second embodiment, the second return flow path 72 communicates with the second branching flow path 52 via the second connection flow path 62. Returning from the other end side of the first direction X to the second auxiliary flow path 82 means returning from a side of the second side surface 10B as far as a position in front of the second auxiliary flow path 82. In other words, the second return flow path 72 is provided in a state of being not connected to the second auxiliary flow path 82. Accordingly, the second return flow path 72 is provided to communicate with the second branching flow path 52 via the second connection flow path 62 and extend along the first direction X from the second connection flow path 62 to the position in front of the second auxiliary flow path 82.

The branch flow path 90 extends along the first direction X from the auxiliary flow path 80. The branch flow path 90 includes a first branch flow path 91 and a second branch flow path 92. As illustrated in FIG. 4, the first branch flow path 91 corresponds to a flow path communicating with the first auxiliary flow path 81 and extending along the first direction X from the first auxiliary flow path 81 as far as a central area of the first direction X. The central area of the first direction X is a central area in the first direction X between the first side surface 10A and the second side surface 10B. Accordingly, the first branch flow path 91 is provided to communicate with the first branching flow path 51 via the first auxiliary flow path 81 and extend from the first auxiliary flow path 81 as far as the central area in the first direction X between the first side surface 10A and the second side surface 10B. The second branch flow path 92 corresponds to a flow path communicating with the second auxiliary flow path 82 and extending along the first direction X from the second auxiliary flow path 82 as far as the central area of the first direction X. Accordingly, the second branch flow path 92 is provided to communicate with the second branching flow path 52 via the second auxiliary flow path 82 and extend from the second auxiliary flow path 82 as far as the central area in the first direction X between the first side surface 10A and the second side surface 10B. The first branch flow path 91 and the second branch flow path 92 are provided over the battery module 2 while being not connected to each other.

One of the first return flow path 71, the second return flow path 72, the first branch flow path 91, and the second branch flow path 92 is located over one of the respective cells 3 of the battery module 2. In the example of FIG. 4, the first return flow path 71 is provided to extend along the first direction X with respect to the first branching flow path 51 in such a way as to be located over the cell 3 closest to the first side surface 10A. The second return flow path 72 is provided to extend along the first direction X with respect to the second branching flow path 52 in such a way as to be located over the cell 3 closest to the second side surface 10B. Further, the first branch flow path 91 is provided to extend along the first direction X from the first auxiliary flow path 81 in such a way as to be located over the second cell 3 and the third cell 3 from the first side surface 10A. The second branch flow path 92 is provided to extend along the first direction X from the second auxiliary flow path 82 in such a way as to be located over the second cell 3 and the third cell 3 from the second side surface 10B.

In this embodiment, each of the first return flow path 71, the second return flow path 72, the first branch flow path 91, and the second branch flow path 92 includes two discharge ports 30 at positions overlapping with one cell 3 when viewed from an upper side, in such a way as to discharge the cooling liquid while facing to a lower side. Since lengths of the first return flow path 71, the second return flow path 72, the first branch flow path 91, and the second branch flow path 92 along the first direction X can be made substantially equal to each other, a plurality of the cells 3 arranged along the first direction X can be cooled uniformly.

### [Fourth Embodiment]

Next, a fourth embodiment of the battery cooling device 1 is described. In the first embodiment, the second embodiment, and the third embodiment described above, the communication path 40 is illustrated and described as one having a uniform flow-path cross-sectional area. The communication path 40 in this embodiment has a nonuniform flow-path cross-sectional area, and in this regard, differs from those in the above-described embodiments. The other configurations are similar to those in the first embodiment, and description thereof is omitted, and the following mainly describes the points that differ from those in the first embodiment.

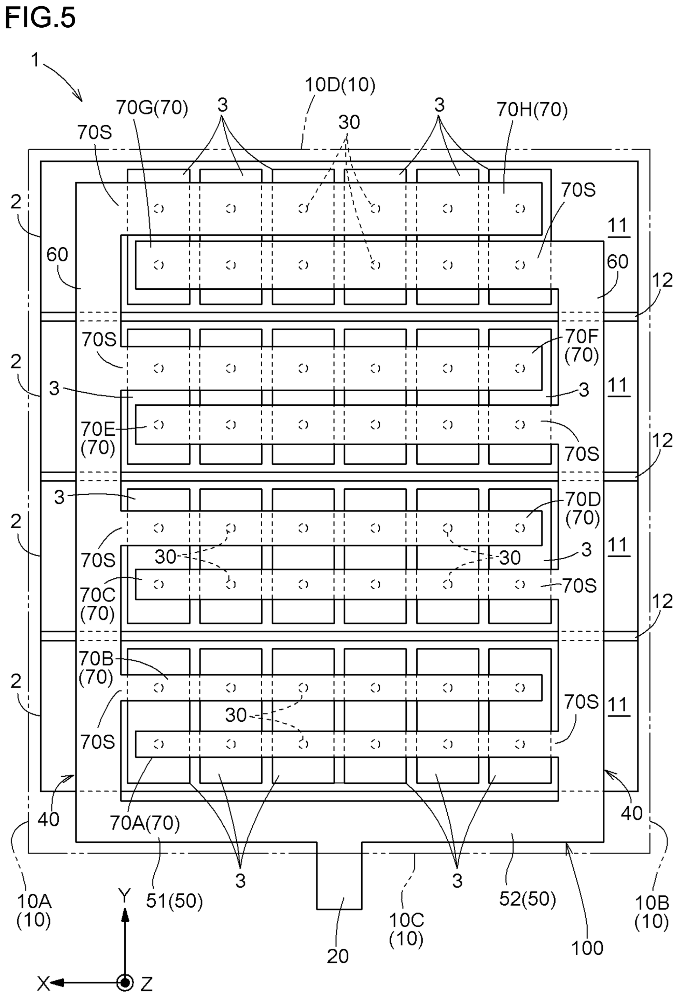

In this embodiment, the battery cooling device 1 includes a flow rate control mechanism 100 that causes a pressure loss of the cooling liquid flowing in the return flow path 70 to become larger for a shorter distance from the pump P to a turn part 70S that is a starting point in the return flow path 70. FIG. 5 illustrates the pump P, the return flow path 70, and the turn part 70S. In this embodiment, the pump P communicates with the inlet port 20, and the cooling liquid is introduced into the battery cooling device 1 from the inlet port 20. The cooling liquid introduced from the inlet port 20 flows into the return flow path 70 via the branching flow path 50 and the connection flow path 60. The turn part 70S that is the starting point in the return flow path 70 corresponds to a connection portion between the return flow path 70 and the connection flow path 60.

In this embodiment, four return flow paths 70 are arranged along the second direction Y at the connection flow path 60 that is on a side of the first side surface 10A and that communicates with the first branching flow path 51. Hereinafter, these four return flow paths 70 are referred to as the return flow paths 70B, the return flow path 70D, the return flow path 70F, and the return flow path 70H in the order from a side closer to the inlet port 20. Four return flow paths 70 are arranged along the second direction Y at the connection flow path 60 that is on a side of the second side surface 10B and that communicates with the second branching flow path 52. Hereinafter, these four return flow paths 70 are referred to as the return flow path 70A, the return flow path 70C, the return flow path 70E, and the return flow path 70G in the order from the side closer to the inlet port 20.

Accordingly, among distances from the pump P to the respective turn parts 70S of the return flow path 70A, the return flow path 70B, the return flow path 70C, the return flow path 70D, the return flow path 70E, the return flow path 70F, the return flow path 70G, and the return flow path 70H, the distance to the turn part 70S of the return flow path 70A is the shortest, and the distances for the return flow path 70A, the return flow path 70B, the return flow path 70C, the return flow path 70D, the return flow path 70E, the return flow path 70F, the return flow path 70G, and the return flow path 70H gradually become longer in this order.

Accordingly, in this embodiment, the battery cooling device 1 is configured in such a way that a pressure loss is the largest for the cooling liquid flowing in the return flow path 70A, and a pressure loss become gradually smaller in the order of the return flow path 70B, the return flow path 70C, the return flow path 70D, the return flow path 70E, the return flow path 70F, the return flow path 70G, and the return flow path 70H.

In this embodiment, the flow rate control mechanism 100 is configured in such a way that a flow-path cross-sectional area of the return flow path 70A is the smallest, and a flow-path cross-sectional area become gradually larger in the order of the return flow path 70B, the return flow path 70C, the return flow path 70D, the return flow path 70E, the return flow path 70F, the return flow path 70G, and the return flow path 70H.

Thereby, although a flow rate of the cooling liquid in the connection flow path 60 becomes smaller at a position farther from the inlet port 20, a flow-path cross-sectional area of the return flow path 70 becomes smaller at a position closer to the inlet port 20 so that a smaller quantity of the cooling liquid can be discharged from the discharge port 30 at a position closer to the inlet port 20, and a flow-path cross-sectional area of the return flow path 70 becomes larger at a position farther from the inlet port 20 so that a larger quantity of the cooling liquid can be discharged from the discharge port 30 at a position farther from the inlet port 20. Accordingly, quantities of the cooling liquid discharged from the respective discharge ports 30 of the return flow path 70A, the return flow path 70B, the return flow path 70C, the return flow path 70D, the return flow path 70E, the return flow path 70F, the return flow path 70G, and the return flow path 70H become approximately equal to each other, and thus, a difference in the cooling effect on the respective battery modules 2 can be reduced.

### [Alternative Embodiments]

In the examples cited in the above-described embodiments, the battery case 10 includes four accommodation portions 11. However, the number of the accommodation portions 11 may be two or three. Alternatively, the number of the accommodation portions 11 may be equal to or larger than five.

In the above-described embodiment, the battery cooling device 1 is described above as one including the flow rate control mechanism 100 that causes a pressure loss of the cooling liquid flowing in the return flow path 70 to become larger for a shorter distance from the pump P to the turn part 70S that is the starting point in the return flow path 70. However, the battery cooling device 1 can also be configured without including the flow rate control mechanism 100.

In the above-described embodiment, the flow rate control mechanism 100 is described as being configured in such a way that a flow-path cross-sectional area of the return flow path 70 becomes smaller for a shorter distance from the pump P to the turn part 70S of the return flow path 70, and a flow-path cross-sectional area of the return flow path 70 becomes larger for a longer distance from the pump P to the turn part 70S of the return flow path 70. Alternatively, for example, the flow rate control mechanism 100 can be configured in such a way that a length of the return flow path 70 becomes longer for a shorter distance from the pump P to the turn part 70S of the return flow path 70, and a flow-path cross-sectional area of the return flow path 70 becomes shorter for a longer distance from the pump P to the turn part 70S of the return flow path 70. Further, the flow rate control mechanism 100 may be configured in such a way that both of a decrease in a flow-path cross-sectional area of the return flow path 70 and an increase in a length of the return flow path 70 cause a pressure loss to become larger.

In the above-described embodiments, the battery is described as one including a plurality of the battery modules 2, and the battery case 10 accommodates a plurality of the battery modules 2. However, alternatively, the battery may be configured to include the single battery module 2. In this case, the battery case 10 accommodates the single battery module 2. Even in such a case, the battery module 2 can be cooled uniformly.

### [Outline of Above-Described Embodiments]

The following describes an outline of the above-described battery cooling device 1.

(1) A battery cooling device 1 cools a battery including a battery module 2 in which a plurality of cells 3 are arranged along a first direction X. The battery cooling device 1 includes: a battery case 10 including an accommodation portion 11 that accommodates the battery module 2; an inlet port 20 provided to be at a central portion in the first direction X in the battery case 10 and be on one end side in a second direction Y perpendicular to the first direction X, cooling liquid supplied from a pump P being introduced into the inlet port 20; discharge ports 30 discharging, on an upper side of a plurality of the cells 3, the cooling liquid introduced into the inlet port 20; and a communication path 40 causing the inlet port 20 and the discharge ports 30 to communicate with each other, wherein the communication path 40 includes a branching flow path 50 including a first branching flow path 51 and a second branching flow path 52, the first branching flow path 51 communicates with the inlet port 20 and branches to one end side of the first direction X, and the second branching flow path 52 communicates with the inlet port 20 and branches to an opposite end side of the first direction X.

According to this configuration, the cooling liquid introduced into the inlet port 20 is branched by the branching flow path 50 to flow, thereby enabling reduction of a variation in lengths (flow path lengths) for the communication path 40 to cause the inlet port 20 to communicate with the discharge ports 30 provided on an upper side of a plurality of the respective cells 3. Accordingly, a variation in quantities of the cooling liquid discharged toward a plurality of the respective cells 3 can be reduced, and thus, the battery module 2 can be cooled uniformly.

(2) In the battery cooling device 1 according to (1), preferably, the communication path 40 includes: a connection flow path 60 including a first connection flow path 61 and a second connection flow path 62, the first connection flow path 61 communicating with the first branching flow path 51 and extending along the second direction Y on the one end side of the first direction X, the second connection flow path 62 communicating with the second branching flow path 52 and extending along the second direction Y on the opposite end side of the first direction X; and a return flow path 70 including a first return flow path 71 and a second return flow path 72, the first return flow path 71 extending from the first connection flow path 61 to a side of the second connection flow path 62, the second return flow path 72 extending from the second connection flow path 62 to a side of the first connection flow path 61.

According to this configuration, via the connection flow path 60 extending along the second direction Y from the branching flow path 50 extending along the first direction X from the inlet port 20, the cooling liquid flows in the return flow path 70 extending from one connection flow path 60 to a side of the other connection flow path 60. Thereby, the flow path through which the cooling liquid flows along both the first direction X and the second direction Y of the battery module 2 is formed so that the battery module 2 can be cooled more uniformly.

(3) In the battery cooling device 1 according to (2), preferably, the first return flow path 71 and the second return flow path 72 at least partially overlap with each other in the second direction Y.

According to this configuration, for example, one or both of providing the second return flow path 72 between two first return flow paths 71 adjacent to each other and providing the first return flow path 71 between two second return flow paths 72 adjacent to each other enables a distance between the return flow paths 70 adjacent to each other to be reduced. Accordingly, the cooling liquid can be discharged more uniformly toward a plurality of the cells 3, and thus, the battery module 2 can be cooled uniformly. A space between two first return flow paths 71 or a space between two second return flow paths 72 can be effectively used to form the flow path.

(4) In the battery cooling device 1 according to (3), preferably, the first return flow path 71 extends along the first direction X as far as a position in front of the second connection flow path 62, and the second return flow path 72 extends along the first direction X as far as a position in front of the first connection flow path 61.

According to this configuration, a quantity of the cooling liquid flowing in the first return flow path 71 becomes larger at a position closer to the first branching flow path 51, and becomes smaller at a position farther from the first branching flow path 51. A quantity of the cooling liquid flowing in the second return flow path 72 becomes larger at a position closer to the second branching flow path 52, and becomes smaller at a position farther from the second branching flow path 52. Accordingly, for example, on a side in the first return flow path 71 and closer to the first branching flow path 51, the cooling liquid can be discharged from the discharge port 30 in the first return flow path 71 and on a side closer to the first branching flow path 51 and can be discharged from the discharge port 30 in the second return flow path 72 and on a side farther from the second branching flow path 52. On a side in the first return flow path 71 and farther from the first branching flow path 51, the cooling liquid can be discharged from the discharge port 30 in the first return flow path 71 and on a side farther from the first branching flow path 51 and can be discharged from the discharge port 30 in the second return flow path 72 and on a side closer to the second branching flow path 52. In an intermediate area in the first return flow path 71, the cooling liquid can be discharged from the discharge port 30 in an intermediate area in the first return flow path 71 and can be discharged from the discharge port 30 in an intermediate area in the second return flow path 72. Thereby, an averaged quantity of the cooling liquid can be discharged, and thus, the battery module 2 can be cooled more uniformly.

(5) In the battery cooling device 1 according to (2), preferably, the first return flow path 71 returns from the first connection flow path 61 as far as a central area of the first direction X, the second return flow path 72 returns from the second connection flow path 62 as far as the central area, and the return flow path 70 is provided in such a way that both the first return flow path 71 and the second return flow path 72 are located over one battery module 2.

According to this configuration, respective lengths of the first return flow path 71 and the second return flow path 72 can be reduced. Thus, a variation in quantities of the cooling liquid discharged from a plurality of the respective discharge ports 30 provided in the first return flow path 71 can be reduced, and a variation in quantities of the cooling liquid discharged from a plurality of the respective discharge ports 30 provided in the second return flow path 72 can be reduced. Thereby, the battery module 2 can be cooled more uniformly.

(6) In the battery cooling device 1 according to (2), preferably, the communication path 40 further includes: an auxiliary flow path 80 branching from an intermediate part of the branching flow path 50; the return flow path 70 returning with respect to the branching flow path 50; and a branch flow path 90 extending from the auxiliary flow path 80. The auxiliary flow path 80 includes a first auxiliary flow path 81 branching from the intermediate part of the first branching flow path 51 to an opposite end side of the second direction Y, and a second auxiliary flow path 82 branching from the intermediate part of the second branching flow path 52 to the opposite end side of the second direction Y. The first return flow path 71 returns from the first connection flow path 61 to a side of the first auxiliary flow path 81. The second return flow path 72 returns from the second connection flow path 62 to a side of the second auxiliary flow path 82. The branch flow path 90 includes a first branch flow path 91 communicating with the first auxiliary flow path 81 and extending along the first direction X from the first auxiliary flow path 81 as far as a central area of the first direction X, and a second branch flow path 92 communicating with the second auxiliary flow path 82 and extending along the first direction X from the second auxiliary flow path 82 as far as the central area.

According to this configuration, a variation in lengths from the inlet port 20 to the discharge ports 30 provided over a plurality of the respective cells 3 can be reduced. Accordingly, quantities of the cooling liquid discharged to a plurality of the respective cells 3 can be made uniform, and thus, the battery module 2 can be cooled more uniformly.

(7) In the battery cooling device 1 according to (2) to (6), preferably, the battery cooling device 1 further includes a flow rate control mechanism 100 that causes a pressure loss of the cooling liquid flowing in the return flow path 70 to become larger as a distance from the pump P to a turn part becomes shorter, and the turn part is a starting point in the return flow path 70.

According to this configuration, regardless of distances from the inlet port 20 to the discharge ports 30, a variation in quantities of the cooling liquid discharged from the discharge ports 30 can be further reduced. Accordingly, the battery module 2 can be cooled more uniformly.

(8) In the battery cooling device 1 according to (1), preferably, the battery includes a plurality of the battery modules 2, a plurality of the battery modules 2 are arranged along the second direction Y, and the battery case 10 accommodates a plurality of the battery modules 2.

According to this configuration, a plurality of the battery modules 2 can be cooled uniformly.

### Industrial Applicability

The present invention can be applied to a battery cooling device that cools a battery.

### Reference Signs List

1: battery cooling device, 2: battery module, 3: cell, 10: battery case, 11: accommodation portion, 20: inlet port, 30: discharge port, 40: communication path, 50: branching flow path, 51: first branching flow path, 52: second branching flow path, 60: connection flow path, 61: first connection flow path, 62: second connection flow path, 70: return flow path, 70S: turn part, 71: first return flow path, 72: second return flow path, 80: auxiliary flow path, 81: first auxiliary flow path, 82: second auxiliary flow path, 90: branch flow path, 91: first branch flow path, 92: second branch flow path, 100: flow rate control mechanism, P: pump, X: first direction, Y: second direction

## Claims

1. A battery cooling device that cools a battery including a battery module in which a plurality of cells are arranged along a first direction, the battery cooling device comprising:
a battery case including an accommodation portion that accommodates the battery module;
an inlet port that is provided at a central portion in the first direction in the battery case and on one end side in a second direction perpendicular to the first direction, and into which cooling liquid supplied from a pump is introduced;
discharge ports discharging, on an upper side of each of a plurality of the cells, the cooling liquid introduced into the inlet port; and
a communication path causing the inlet port and the discharge ports to communicate with each other, wherein
the communication path includes a branching flow path including a first branching flow path and a second branching flow path, the first branching flow path communicating with the inlet port and branching to one end side of the first direction, the second branching flow path communicating with the inlet port and branching to another end side of the first direction.

2. The battery cooling device according to Claim 1, wherein
the communication path includes:
a connection flow path including a first connection flow path and a second connection flow path, the first connection flow path communicating with the first branching flow path and extending along the second direction on the one end side of the first direction, the second connection flow path communicating with the second branching flow path and extending along the second direction on the another end side of the first direction; and
a return flow path including a first return flow path and a second return flow path, the first return flow path extending from the first connection flow path to a side of the second connection flow path, the second return flow path extending from the second connection flow path to a side of the first connection flow path.

3. The battery cooling device according to Claim 2, wherein
the first return flow path and the second return flow path at least partially overlap with each other in the second direction.

4. The battery cooling device according to Claim 3, wherein
the first return flow path extends along the first direction as far as a position in front of the second connection flow path, and
the second return flow path extends along the first direction as far as a position in front of the first connection flow path.

5. The battery cooling device according to Claim 2, wherein
the first return flow path returns from the first connection flow path as far as a central area of the first direction, and the second return flow path returns from the second connection flow path as far as the central area, and
the return flow path is provided in such a way that both the first return flow path and the second return flow path are located over one of the battery module.

6. The battery cooling device according to Claim 2, wherein
the communication path further includes: an auxiliary flow path branching from an intermediate part of the branching flow path; a return flow path returning with respect to the branching flow path; and a branch flow path extending from the auxiliary flow path,
the auxiliary flow path includes a first auxiliary flow path branching from the intermediate part of the first branching flow path to another end side of the second direction, and a second auxiliary flow path branching from the intermediate part of the second branching flow path to the another end side of the second direction,
the first return flow path returns from the first connection flow path to a side of the first auxiliary flow path, and the second return flow path returns from the second connection flow path to a side of the second auxiliary flow path, and
the branch flow path includes a first branch flow path communicating with the first auxiliary flow path and extending along the first direction from the first auxiliary flow path as far as a central area of the first direction, and a second branch flow path communicating with the second auxiliary flow path and extending along the first direction from the second auxiliary flow path as far as the central area.

7. The battery cooling device according to any one of Claims 2 to 6, further comprising
a flow rate control mechanism that causes a pressure loss of the cooling liquid flowing in the return flow path to become larger as a distance from the pump to a turn part being a starting point in the return flow path becomes shorter.

8. The battery cooling device according to Claim 1, wherein
the battery includes a plurality of the battery modules, and a plurality of the battery modules are arranged along the second direction, and
the battery case accommodates a plurality of the battery modules.
